Europäisches Patentamt

European Patent Office

Office européen des brevets

(19)

(11) Numéro de publication: **0 143 730**
**A1**

## DEMANDE DE BREVET EUROPEEN

(21) Numéro de dépôt: 84430037.6

(22) Date de dépôt: 26.10.84

(51) Int. Cl.⁴: **B 26 B 15/00,** A 01 G 3/03, F 15 B 7/10

(30) Priorité: **28.10.83 FR 8317436**

(43) Date de publication de la demande: **05.06.85 Bulletin 85/23**

(84) Etats contractants désignés: **AT BE CH DE FR GB IT LI LU NL SE**

(71) Demandeur: **ETABLISSEMENTS PELLENC ET MOTTE, Quartier Notre Dame Route de Villelaure, F-84120 Pertuis (FR)**

(72) Inventeur: **Pellenc, Roger Joseph Pierre, Quartier de la Piscine, F-84120 Pertuis (FR)**

(74) Mandataire: **Marek, Pierre, 32, rue de la Loge, F-13002 Marseille (FR)**

(54) **Outils hydropneumatiques, notamment outils hydropneumatiques portatifs tels que, par exemple, sécateurs hydropneumatiques.**

(57) Outils hydropneumatiques, notamment outils hydropneumatiques portatifs tels que, par exemple, sécateurs hydropneumatiques destinés aux travaux de taille ou de récolte en agriculture, arboriculture, viticulture ou horticulture, comprenant principalement: un outil proprement dit dont au moins un organe actif mobile est assujetti à un piston monté avec une aptitude de coulissement axial dans l'alésage d'un cylindre et constituant, avec celui-ci, un vérin hydraulique récepteur; et un multiplicateur de pression air-huile comprenant un piston hydropneumatique (19-20-21) formé d'un gros piston (19) et d'un petit piston (20) et dont la course active s'effectue sous la poussée d'un fluide gazeux comprimé s'appliquant sur la grande face de travail dudit gros piston; la face de travail dudit petit piston qui constitue le piston d'un vérin hydraulique moteur (20-22), permettant d'appliquer une pression sur le fluide hydraulique destiné à l'actionnement du piston du vérin hydraulique récepteur de l'outil proprement dit; caractérisés en ce qu'ils comportent des moyens de compensation de fuites d'huile comprenant un réservoir (F), par exemple aménagé à l'intérieur du corps (18) du multiplicateur air-huile, et un agencement (E, 22a, 22b, 24a, 24b) permettant d'établir une communication entre ce réservoir et la chambre du vérin hydraulique moteur (20-22) lorsque le piston (20) de ce dernier est en position de recul ou repos.

Outils hydro-pneumatiques, notamment outils hydropneumatiques portatifs tels que, par exemple, sécateurs hydropneumatiques.

La présente invention concerne les outils hydro-pneumatiques et, notamment, les outils hydro-pneumatiques portatifs tels que, par exemple, les sécateurs ou cisailles hydropneumatiques comprenant principalement :

- un outil portatif proprement dit dont au moins un organe actif mobile est assujeti à un piston monté avec une aptitude de coulissement axial dans l'alésage d'un cylindre et constituant, avec celui-ci, un vérin hydraulique récepteur ;

- et un multiplicateur de pression air- huile comprenant un piston hydropneumatique formé d'un gros piston et d'un petit piston, et dont la course active s'effectue sous la poussée d'un fluide gazeux comprimé s'appliquant sur la grande face de travail dudit gros piston ; la face de travail dudit petit piston qui constitue le piston d'un vérin hydraulique moteur, permettant d'appliquer une pression sur le fluide hydraulique destiné à l'actionnement du piston du vérin hydraulique récepteur de l'outil proprement dit.

De tels outils comprennent encore, généralement, un distributeur pneumatique commandant le passage du fluide gazeux comprimé en direction de la chambre de pression délimitée par la grande face active du gros piston du piston hydropneumatique et comportant un tiroir de distribution dont les déplacements sont commandés à l'aide d'un dispositif de pilotage actionné au moyen d'un organe de commande porté par l'outil proprement dit.

La source de fluide gazeux comprimé peut être constituée par un compresseur, par un réservoir portatif ou mobile, etc.

Dans l'application avantageuse aux outils de coupe tels que les sécateurs ou les cisailles, on a cherché à bénéficier, avec ce genre d'appareils, des qualités propres aux outils entièrement hydrauliques (grande puissance, souplesse, précision, progressivité et qualité de la coupe, encombrement réduit, fonctionnement silencieux, etc.), tout en ayant la possibilité d'utiliser, comme source d'énergie principale, un fluide gazeux (air, azote, etc.), à basses et à moyennes pression, qui a pour avantages d'être gratuit (air), d'être en général disponible en de nombreux endroits (ateliers, etc.) et de permettre l'utilisation de longs tuyaux avec des pertes de charge en transport très faibles.

Dans l'application intéressante aux outils de coupe, on a déjà décrit (Modèle d'Utilité allemand N⁄ G 81 22 827.9) une cisaille pour la taille de la vigne ou des arbustes présentant les caractéristiques susmentionnées.

Cependant, il semble s'agir d'une proposition toute théorique, car il ne parait pas qu'une telle cisaille puisse fonctionner durablement de manière satisfaisante, en raison d'insuffisances et d'imperfections importantes dont elle est affectée.

L'une de ces insuffisances découle du fait que l'on a complètement ignoré le problème posé par les légères fuites constantes et normales d'huile qui se produisent au cours du fonctionnement de tout dispositif hydraulique. Il en résulte que le volume d'huile diminue progressivement dans la chambre et dans le circuit d'alimentation du vérin hydraulique récepteur, ce qui entraîne d'abord une réduction progressive de la course du piston de ce vérin, puis l'impossibilité de déplacer ce dernier, c'est-à-dire un fonctionnement de plus en plus mauvais de l'outil aboutissant à l'arrêt complet de ce fonctionnement.

Une autre imperfection de cette cisaille réside dans le fait que son fonctionnement nécessite l'utilisation de trois tuyaux souples raccordés à l'outil proprement dit, soit : deux tuyaux pour le fonctionnement du distributeur pneumatique et un tuyau pour réaliser la liaison entre le vérin hydraulique moteur et le vérin hydraulique récepteur, ce qui a notamment pour inconvénients : d'alourdir ledit outil, de le rendre encombrant, de compliquer la fabrication de ladite cisaille et d'influer désavantageusement sur son prix de revient.

Un autre inconvénient de ladite cisaille provient du fait qu'elle implique une consommation d'air comprimé très importante, entraînant, selon la nature de la source d'air comprimé utilisée, une fatigue accrue des compresseurs ou un épuisement rapide des réservoirs portatifs ou mobiles ; cet inconvénient étant dû au fait que lorsque le piston hydropneumatique arrive en fin de course active, l'air comprimé continue de s'accumuler dans la chambre délimitée par la grande face du piston hydropneumatique. En outre, lors de la détente du fluide gazeux comprimé accumulé dans ladite chambre, il se produit un refroidissement excessif de l'ensemble d'où un risque important de givrage lorsque la température extérieure est basse.

Un but de l'invention est de remédier aux inconvénients susmentionnés découlant de la mise en oeuvre d'un outil portatif à fonctionnement hydropneumatique tels que celui qui est proposé dans le document précité.

Selon l'invention, cet objectif est atteint grâce à un outil hydropneumatique qui est remarquable, en premier lieu, par le fait qu'il est doté d'un dispositif compensateur de fuites d'huile comprenant un réservoir d'huile et des moyens permettant d'établir une

- 4 -

0143730

communication entre ce réservoir et la chambre de travail du vérin hydraulique du multiplicateur de pression air-huile, lorsque le piston de ce vérin est en position de recul ou repos.

On obtient, par cet agencement, un fonctionnement parfait et constant du vérin de l'outil proprement dit.

Suivant une autre caractéristique de l'invention, le dispositif de pilotage qui commande les déplacements du tiroir de distribution du distributeur pneumatique comprend un unique conduit dont l'orifice de sortie est susceptible d'être obturé ou ouvert au moyen de l'organe de commande porté par l'outil proprement dit et dont l'orifice d'entrée s'ouvre dans une chambre de pilotage délimitée par la grande face active d'un piston différentiel constitué par l'un des extrémités dudit tiroir de distribution, ladite chambre de pilotage communiquant, en permanence, avec l'entrée du fluide gazeux comprimé, au moyen d'un canal calibré à très faible débit.

Grâce à cette disposition, la commande du distributeur pneumatique s'opère par l'intermédiaire d'un unique tuyau souple, ce qui allège l'outil, réduit son encombrement, simplifie sa fabrication et permet de diminuer son prix de revient.

Selon une autre caractéristique de l'invention, le multiplicateur de pression air-huile comprend des moyens permettant d'interrompre l'admission du fluide gazeux comprimé dans la chambre de pression délimitée par la grande face de travail du piston hydropneu-matique avant que le piston pneumatique de ce dernier n'arrive en fin de course active.

Grâce à cette disposition, on évite que le fluide gazeux comprimé ne continue de s'accumuler par surcompression dans ladite chambre lorsque le piston

0143730

pneumatique arrive en fin de course. On obtient, de la
sorte, une réduction de la consommation du fluide
gazeux sous pression et, par conséquent, suivant la
nature de la source de fluide comprimé utilisée, une
fatigue moindre des compresseurs ou un épuisement moins
rapide des réservoirs ; la quantité de fluide gazeux
consommée étant proportionnelle à l'effort de coupe, ce
qui permet de réduire la consommation d'énergie. Cet
agencement supprime en outre les risques de givrage.

Ces buts, caractéristiques et avantages, et d'autres
encore, ressortiront mieux de la description qui suit
et des dessins annexés dans lesquels :

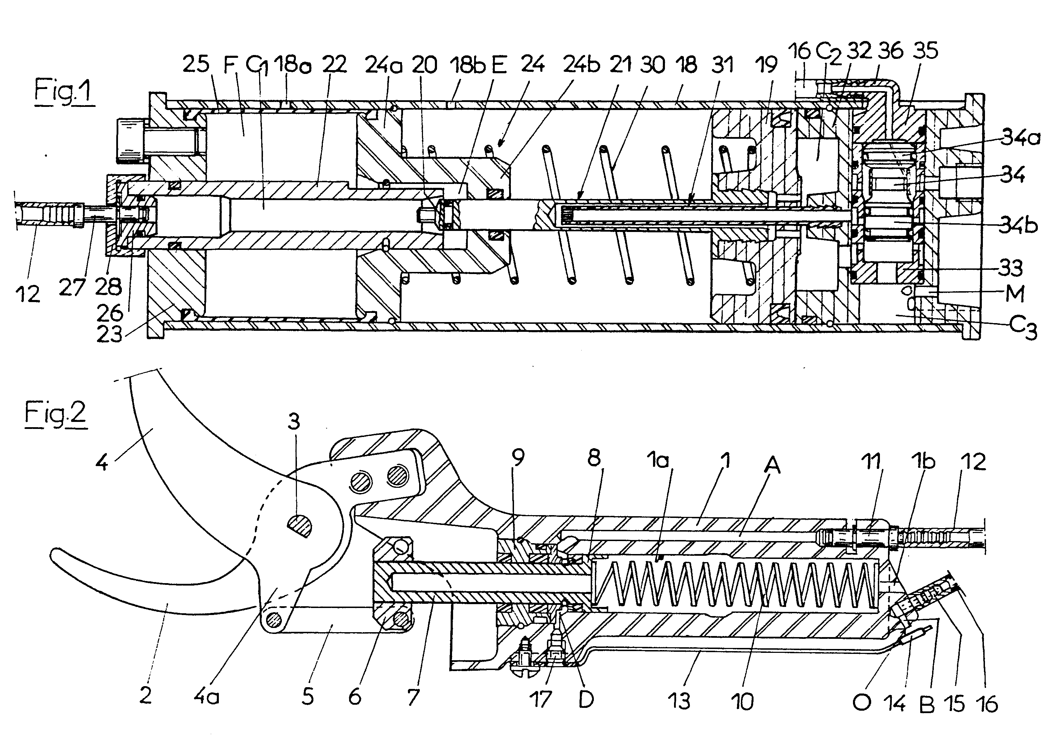

La figure 1 est une vue en coupe axiale illustrant un
mode d'exécution intéressant du multiplicateur de
pression air-huile des outils hydropneumatiques selon
l'invention, dont le piston hydropneumatique est
représenté en position de repos qui, dans l'exemple
avantageux d'une application de celle-ci aux sécateurs,
correspond à l'ouverture des lames de ces derniers.
La figure 2 est une vue en coupe axiale d'un mode de
réalisation avantageux de l'outil proprement dit qui,
selon l'exemple d'application intéressant choisi pour
la description de l'invention, est un sécateur dont les
différents organes mobiles sont représentés dans une
position correspondant à l'ouverture de ses lames et à
la position des organes mobiles du multiplicateur
air-huile illustré à la figure 1.

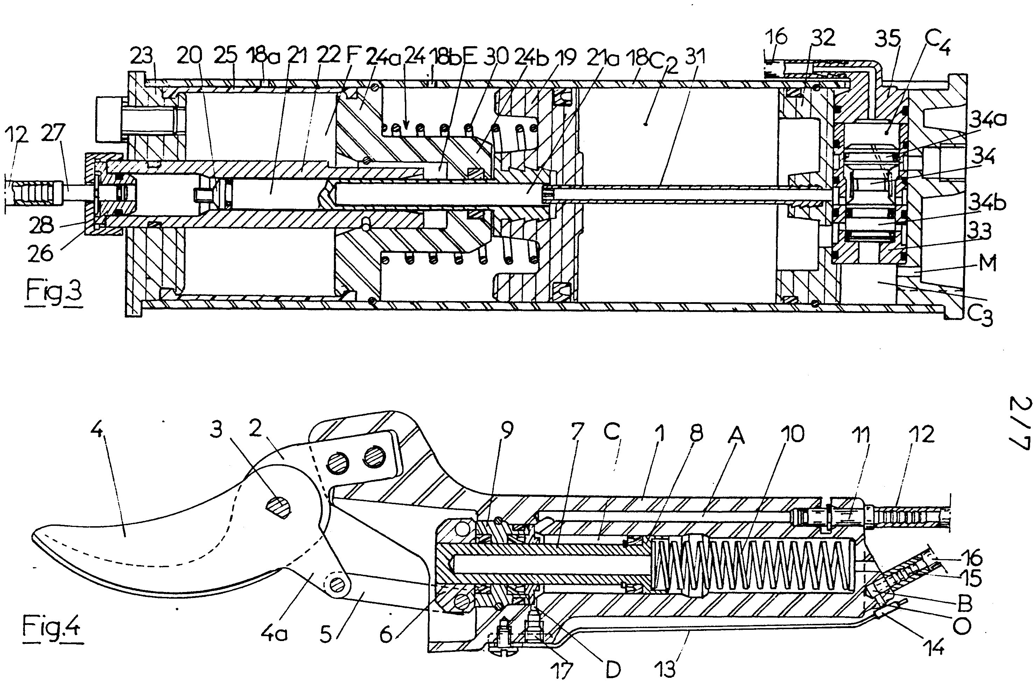

La figure 3 est une vue en coupe axiale semblable à la
figure 1 et suivant laquelle le piston hydropneumatique
du multiplicateur air-huile est représenté en fin de
course active qui, dans l'application aux sécateurs,
correspond à la fermeture des lames de ceux-ci et à la
fin de l'action de coupe.
La figure 4 est une vue en coupe axiale semblable à la
figure 2 et selon laquelle les organes mobiles du

sécateur sont représentés dans une position correspondant à la fermeture de ses lames et à la position des organes mobiles du multiplicateur air-huile illustré à la figure 2.

La figure 5 est une vue partielle et à plus grande échelle de la fiture 1, illustrant l'agencement de la partie avant du multiplicateur air-huile pour constituer un dispositif de compensation automatique des fuites d'huile du système hydraulique des outils.

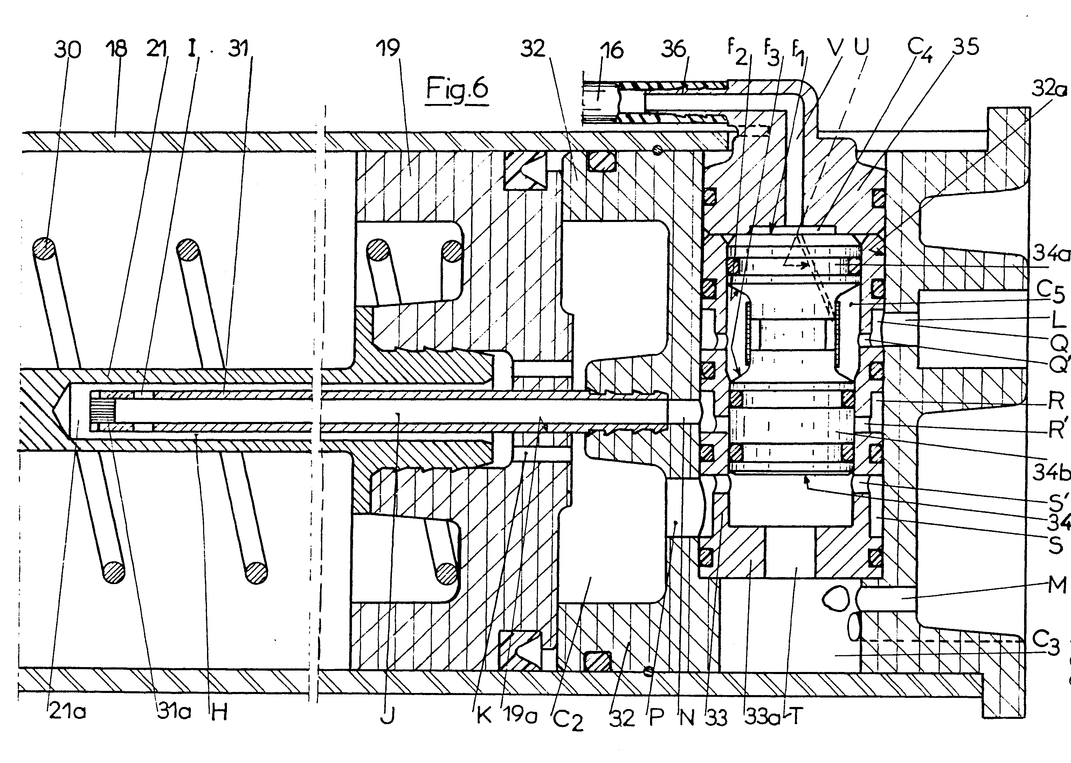

La figure 6 est également une vue partielle et à plus grande échelle de la figure 1, montrant plus spécialement les moyens de pilotage du tiroir de distribution du distributeur pneumatique qui équipent le multiplicateur air-huile et le dispositif de limitation d'admission du fluide gazeux comprimé.

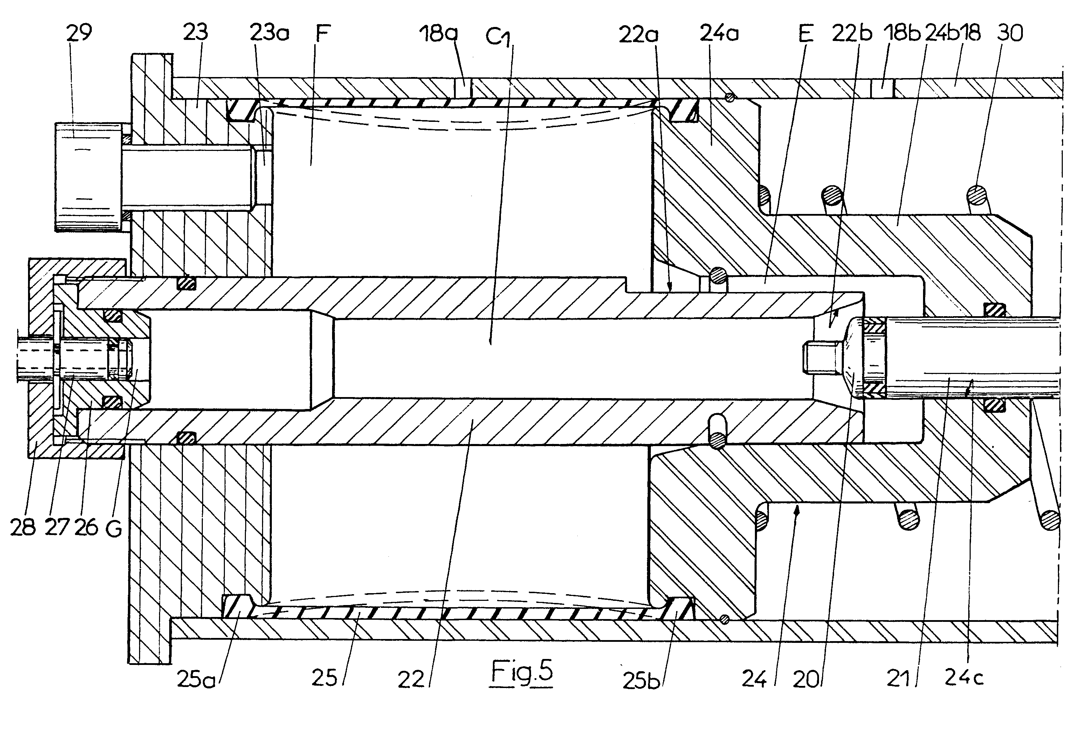

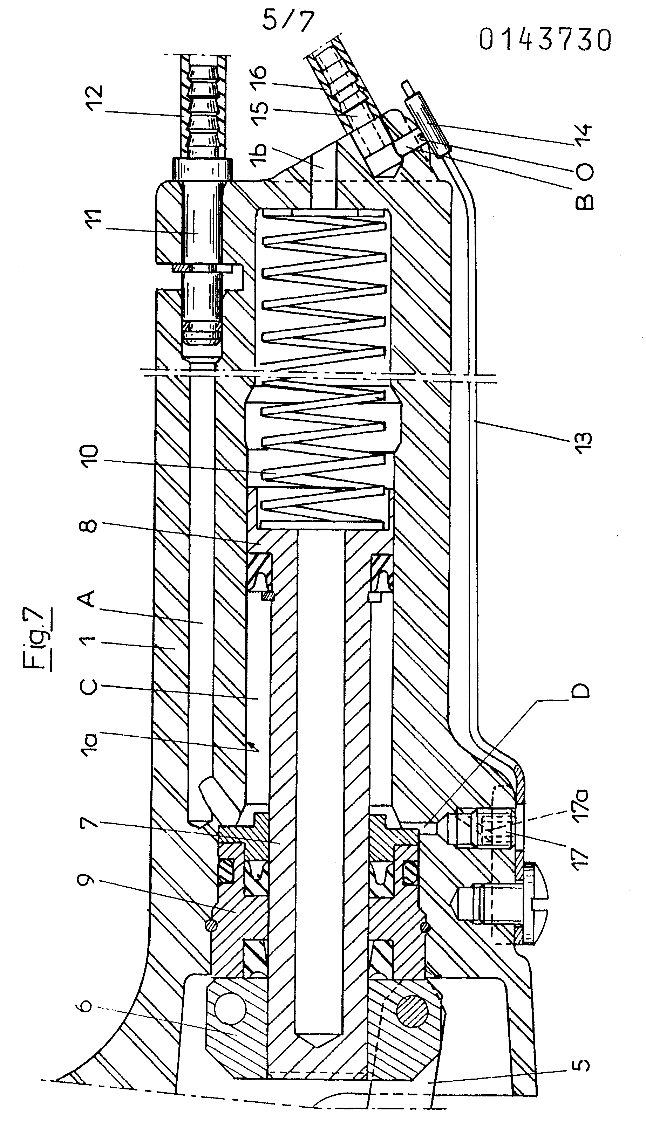

La figure 7 est une vue partielle et à plus grande échelle de la figure 4.

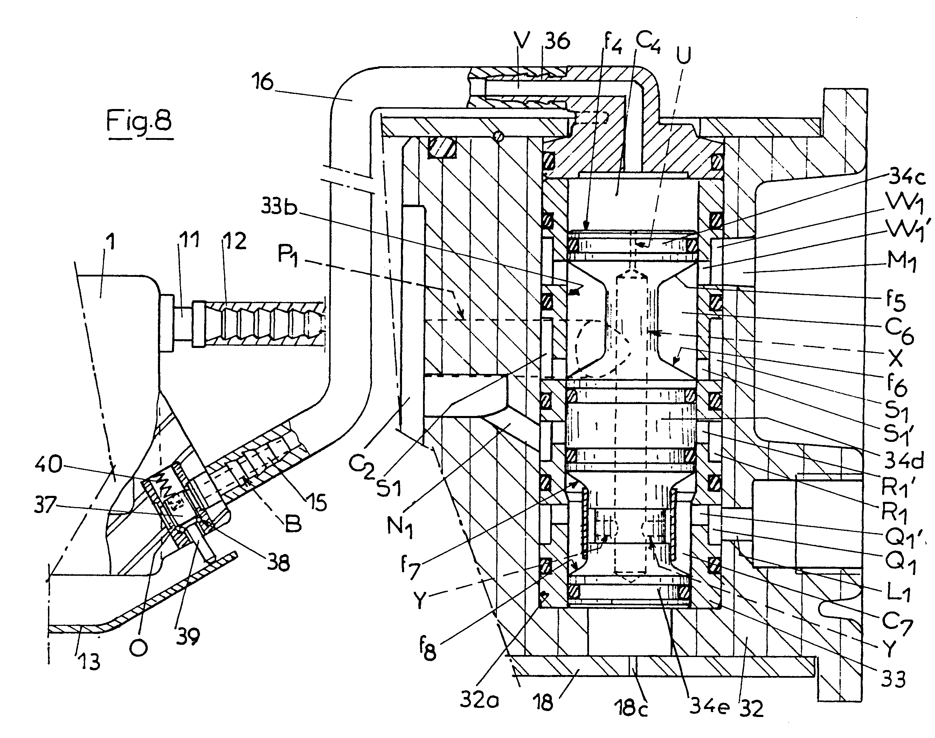

La figure 8 est une vue partielle en coupe axiale d'une variante de réalisation du distributeur pneumatique et du dispostif de commande du système de pilotage du tiroir de distribution dudit distributeur, dont les organes mobiles sont représentées dans une position neutre correspondant à l'ouverture des lames.

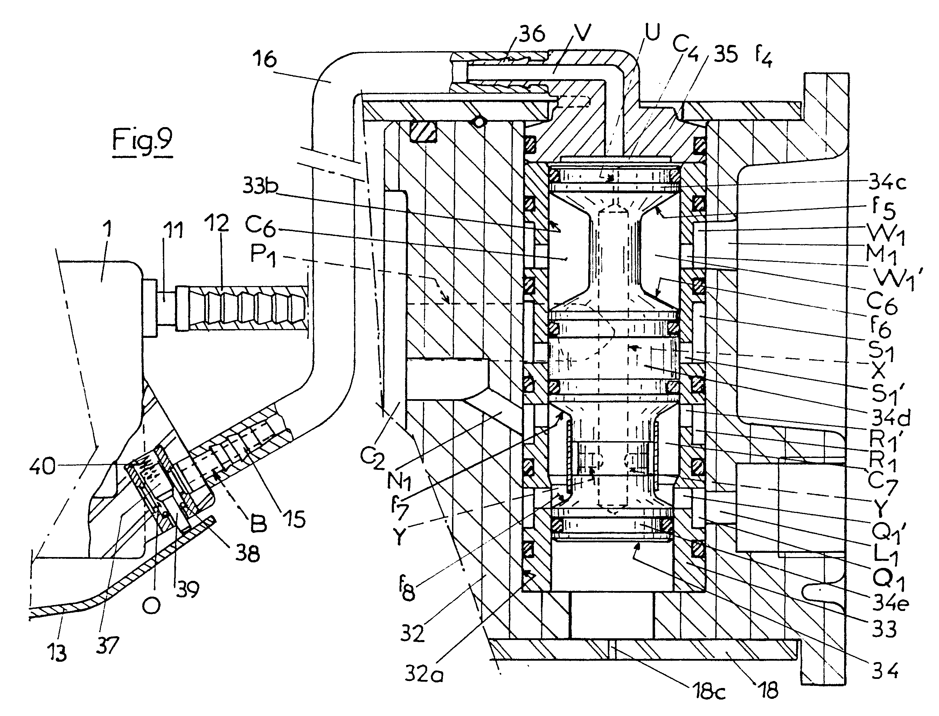

La figure 9 est une vue analogue à la figure 8 et montrant les organes mobiles du distributeur pneumatique et de son dipositif de commande dans la position active correspondant à la fermeture des lames.

On se réfère auxdits dessins pour décrire un exemple de réalisation intéressant, quoique nullement limitatif, des outils hydropneumatiques selon l'invention.

Cette dernière peut être appliquée à la réalisation d'appareils ou outils hydropneumatiques divers et, notamment, à l'exécution de nombreux outils hydropneumatiques portatifs tels que, par exemple, sécateurs, cisailles pour découper les tôles de caisses de véhicules accidentés, pinces de serrage hydrauliques, etc., comportant une tête de travail équipée d'au moins un organe mobile assujetti au piston d'un vérin hydraulique.

On se reporte, dans l'exposé qui suit, à une application particulièrement intéressante de l'invention à la réalisation de sécateurs hydropneumatiques utilisables pour travaux de taille ou de récolte, en agriculture, arboriculture, viticulture et horticulture, dans lesquels la tête de travail est constituée par une tête de coupe dont l'organe mobile est l'une des deux lames de coupe.

Selon cet exemple d'application, le sécateur hydropneumatique se compose principalement :
- d'un multiplicateur air-huile représenté, dans son ensemble, aux figures 1 et 3 ;
- et du sécateur proprement dit illustré, dans son ensemble, aux figures 2 et 4 ;
lesdits multiplicateur air-huile et sécateur étant reliés au moyen de deux tuyaux flexibles dont on a seulement représenté les portions initiales et terminales sur les dessins.

Le sécateur proprement dit comprend un corps évidé 1 dont la portion arrière est conformée pour servir de poignée et sur la partie antérieure duquel est fixé le crochet ou lame fixe 2 de la tête de coupe. Sur ce crochet, est articulée, au moyen d'un axe 3, la lame mobile 4 de ladite tête de coupe. Cette lame mobile comporte un prolongement ou levier 4a sur lequel est articulée, par l'une de ses extrémités, une biellette 5 dont l'extrémité opposée est articulée sur une chape ou potence 6. Cette chape est rigidement fixée sur l'extrémité avant de la tige 7 d'un piston d'entraînement 8 avantageusement formé d'une seule pièce avec cette

dernière et logé avec une aptitude de coulissement axial étanche, dans un alésage longitudinal 1a du corps 1. Ce dernier constitue ainsi le cylindre d'un vérin hydraulique à simple effet dont le piston délimite, par sa face active, une chambre de volume variable C constituée par la portion avant dudit alésage. La tige 7 du piston 8 est montée avec une aptitude de coulissement étanche, dans un guide annulaire 9 installé fixement, également de façon étanche, dans la partie avant du corps, en alignement avec l'alésage 1a, ledit guide de tige délimitant, par sa face postérieure, la chambre C. Un moyen de rappel est logé dans la portion arrière de l'alésage 1a pour assurer le retour du piston 8. Selon l'exemple illustré, ce moyen de rappel est constitué par un ressort de compression 10 monté en appui, par ses extrémités opposées, d'une part, sur la face inactive arrière du piston 8 et, d'autre part, contre le fond dudit alésage, lequel est pourvu d'un évent 1b. Dans le corps 1, est ménagé un canal A qui débouche, respectivement, par ses extrémités opposées, d'une part, dans la chambre C et, d'autre part, à l'arrière dudit corps. Dans la partie terminale de ce canal, disposée à l'arrière du corps 1, est engagée, de préférence de manière démontable, la portion antérieure d'un raccord 11 pourvue d'au moins un joint périphérique d'étanchéité. Sur la portion extérieure filetée de ce raccord, est fixée l'une des extrémités d'un tuyau flexible 12 dont on a seulement représenté les portions terminales sur les figures 2, 4 et 7. Ce tuyau permet de relier le vérin hydraulique récepteur de l'outil proprement dit au vérin hydraulique moteur du multiplicateur air-huile décrit dans la suite du présent exposé.

Sur le corps 1, est encore monté un organe de commande qui peut être constitué par un levier 13 fixé ou articulé sur ledit corps, à l'aide de tout moyen approprié, et agencé ou équipé de manière à comporter un obturateur 14, par exemple constitué par un clapet rapporté sur l'extrémité libre dudit levier. Cet obturateur est disposé de façon à permettre, suivant la position du levier de commande, la fermeture ou l'ouverture de l'orifice d'échappement O du circuit pneumatique de pilotage du distributeur pneumatique du multiplicateur air-huile. Cet orifice d'échappement est avantageusement constitué par l'orifice de sortie d'un petit canal B ménagé dans la partie arrière du corps 1 et dans la portion d'entrée duquel est installé un raccord 15. Sur la partie extérieure de ce raccord, est fixée l'une des extrémités d'un tuyau flexible 16 reliant le canal B au distributeur pneumatique du multiplicateur ai-huile.

Dans le corps 1, est encore ménagé un conduit de purge D débouchant dans la partie avant de la chambre C et qui est normalement obturé par une vis de purge 17, par exemple pourvue, de façon connue en soi, d'un petit canal de purge 17a.

Le multiplicateur air-huile comprend un corps cylindrique alésé 18 dans l'alésage duquel est monté, avec une aptitude de coulissement axial, un piston hydropneumatique. Ce piston hydropneumatique est constitué par un piston double ou piston étagé et comporte : d'une part, un gros piston 19 et, d'autre part, un petit piston 20 disposé en avant dudit gros piston et en alignement avec ce dernier, lesdits gros piston et petit piston étant rigidement reliés au moyen d'une tige axiale 21.

Le petit piston 20 est monté avec une aptitude de coulissement étanche dans un cylindre 22 installé fixement et coaxialement à l'intérieur du corps 18 et dans la partie avant de ce dernier. Ce cylindre constitue, avec le petit piston 20, le vérin hydraulique

moteur du système hydraulique des outils.

Le cylindre 22 est fixé, par ses parties extrêmes, d'une part, de manière étanche, dans l'alésage axial d'un chapeau annulaire 23 constituant le fond avant fixe du corps cylindrique 18 et, d'autre part, de façon non étanche, dans l'évidement axial E d'une pièce polyvalente étagée 24 logée fixement dans ledit corps, à distance dudit chapeau 23. Cette pièce polyvalente se compose principalement d'une bague de montage et de cloisonnement 24a installée de manière étanche dans le corps 18, et d'un manchon de guidage et de butée 24b ayant un diamètre extérieur sensiblement plus réduit que celui de ladite bague avec laquelle il est avantageusement formé d'une seule pièce.

Les faces placées en vis-à-vis du chapeau 23 et de la bague de montage et de cloisonnement 24a délimitent une chambre ou réservoir annulaire F dont la paroi latérale est constituée par une membrane souple et tubulaire 25. Cette membrane déformable et élastique est fixée, par ses extrémités opposées, qui comportent, par exemple, chacune, un bourrelet circulaire 25a, 25b logé dans une gorge périphérique que présentent, respectivement, le chapeau obturateur 23 et la bague de montage et de cloisonnement 24a, de sorte que lesdites extrémités de la membrane se trouvent serrées entre la périphérie desdits chapeau et bague et la surface interne du corps 18.

De plus, lesdits bourrelets extrêmes 25a, 25b constituent ainsi des joints circulaires assurant l'étanchéité entre ledit corps et les parois de fond 23 et 24a respectivement, délimitant le réservoir F. La portion du corps ou cylindre 18 qui entoure la membrane déformable 25 est pourvue d'au moins un perçage 18a permettant la déformation de celle-ci. En outre, en ouvrant la vis de purge 17 et en soufflant, dans ce perçage, il est possible de déformer la membrane 25 et de purger parfaitement le réservoir F de l'air qu'il pourrait contenir à la suite de son remplissage, ce qui permet de supprimer aisément toute présence d'air dans le circuit d'huile des outils.

La tige 21 reliant les pistons 19 et 20 est montée avec une aptitude de coulissement étanche et est guidée dans un alésage axial 24c que présente le manchon de guidage et de butée 24b de la pièce polyvalente 24.

L'extrémité intérieure du cylindre 22 est disposée à distance du fond de l'évidement axial E de la pièce polyvalente 24. D'autre part, la longueur de la tige 21 est telle que lorsque le piston hydropneumatique 19-20-21 est en position de fin de course de recul ou position de repos, le piston hydraulique 20 se trouve dégagé de la chambre C1 délimitée par l'alésage du cylindre 22. De la sorte, dans cette position, le réservoir annulaire F communique avec la chambre C1, par l'intermédiaire de l'évidement axial E ; la portion du cylindre 22 qui se trouve engagée dans ce dernier présentant, par exemple, un méplat 22a favorisant cette communication en créant un passage longitudinal entre ledit cylindre et la surface cylindrique dudit évidement.

Afin de favoriser le guidage et la progressivité de la pénétration du piston hydraulique 20 dans l'alésage du cylindre 22, au début de sa course d'avancement, ledit cylindre présente une entrée conique 22b s'évasant en direction de l'extrémité de ce dernier. Grâce à la disposition et à la forme de l'ouverture 22b, le ou les joints périphériques qui équipent le petit piston 20 peuvent entrer et glisser dans l'alésage du cylindre 22 sans frottement ni risques de détérioration.

L'extrémité avant ou extérieure du cylindre 22 du vérin hydraulique moteur 20-22 est fermée par un bouchon 26 pourvu d'un passage axial G dans lequel est installé ou

peut être installé, de préférence de manière démontable, un raccord 27. Le bouchon 26 et le raccord 27 sont, par exemple, fixés au moyen d'un chapeau 28 pourvu d'un orifice axial pour le passage dudit raccord 27 et se vissant sur l'extrémité avant du cylindre 22. Sur la portion extérieure filetée du raccord 27, est fixée la seconde extrémité du tuyau souple 12 permettant d'établir une communication entre le vérin hydraulique moteur 20-22 et le vérin hydraulique récepteur 1-8.

Dans le chapeau 23, est ménagé un orifice taraudé de remplissage 23a débouchant dans le réservoir F et qui est normalement obturé de manière étanche, par un bouchon 29 constitué par une vis équipée d'un joint annulaire d'étanchéité.

Le gros piston ou piston pneumatique 19 du piston hydropneumatique est équipé d'au moins un joint périphérique permettant son coulisement étanche dans le cylindre 18.

Comme cela est expliqué dans la suite du présent exposé, le rappel ou retour du piston hydropneumatique 19-21-20 est principalement assuré sous la poussée de l'huile s'appliquant sur la face active du petit piston 20, sous l'action du ressort de rappel 10 du piston 8.

Selon l'invention, les outils comportent, en outre, un moyen complémentaire de rappel agissant sur le gros piston 19. Ce moyen complémentaire de rappel est, par exemple, constitué par un ressort de compression 30 logé dans le cylindre 18 et disposé autour de la tige 21 du piston hydropneumatique 19-21-20. Ce ressort est calé, par ses extrémités opposées, d'une part contre la bague 24a de la pièce polyvalente fixe 24 dont le manchon 24b sert de moyen de centrage audit ressort et, d'autre part, contre la face inactive du piston pneumatique 19.

L'extrémité libre du manchon 24b de la pièce polyvalente 24 constitue une butée limitant la course active du piston 19. D'autre part, dans sa portion qui entoure ledit manchon 24b, le cylindre 18 est pourvu d'au moins un évent 18b.

La portion postérieure de la tige 21 comporte un évidement longitudinal cylindrique 21a tandis que le piston 19 est pourvu d'un alésage axial 19a aligné avec ledit évidement et au moyen duquel il est monté, avec une aptitude de coulissement étanche, sur un tube d'alimentation fixe 31 porté par le corps ou boîtier 32 du distributeur pneumatique. Entre la surface extérieure de la portion de ce tube qui pénètre dans l'évidement 21a de la tige 21 et la paroi cylindrique dudit évidement est ménagé un passage H ayant de préférence une forme annulaire.

L'extrémité libre 31a du tube d'alimentation 31 est fermée et ce dernier comporte, à proximité de ladite extrémité fermée, au moins un orifice I qui met en communication le passage annulaire H et le canal longitudinal J ménagé à l'intérieur dudit tube.

La face active du piston pneumatique 19 délimite une chambre de pression C2 et cette chambre communique avec le passage annulaire H par l'intermédiaire d'au moins un orifice K prévu dans ledit piston, de préférence, à proximité de son alésage axial et parallèlement à celui-ci.

Le distributeur pneumatique commandant le déplacement du piston hydropneumatique 19-20-21 est installé dans un évidement diamétral 32a du boîtier 32 constituant le fond postérieur du cylindre 18 et délimitant, avec la face active du piston 19, la chambre C2. Dans cet évidement alésé d'axe perpendiculaire à l'axe du piston hydropneumatique, débouchent :

- l'orifice d'alimentation L ménagé à la partie postérieure du boîtier et agencé pour pouvoir être

0143730

raccordé, de toute manière connue, à une tuyauterie souple (non représentée) elle-même reliée à une source de fluide gazeux sous pression qui peut être constituée par un compresseur, par un réservoir portatif ou mobile, etc. ;

- au moins un orifice d'échappement M également ménagé à la partie postérieure du boîtier, par exemple parallèlement audit orifice d'alimentation, et communiquant avec l'atmosphère ;

- un orifice de communication N dans lequel est engagée, fixement, l'extrémité ouverte du tube d'alimentation 31 ;

- un orifice de sortie P communiquant avec la chambre C2.

Le distributeur pneumatique comprend une chemise cylindrique 33 installée fixement dans l'alésage 32a et dotée de trois gorges périphériques espacées, soit :

- une gorge Q communiquant avec l'orifice d'alimentation L ;

- une gorge R se trouvant en relation avec l'orifice de communication N ;

- une gorge S communiquant avec l'orifice de sortie P. Ces gorges annulaires communiquent avec l'alésage de la chemise dans lequel est installé le tiroir de distribution 34, par l'intermédiaire de trous radiaux Q', R', S', respectivement ; ladite chemise étant équipée de joints périphériques assurant l'étanchéité de part et d'autre desdites gorges.

La chemise 33 est, par exemple, calée, par l'intermédiaire de ses bases opposées, d'une part, contre un épaulement circulaire ménagé dans l'évidement 32a et, d'autre part, contre un chapeau 35 engagé fixement dans ce dernier et pourvu d'au moins un joint périphérique d'étanchéité. La chemise 33 comporte un fond 33a pourvu d'un orifice axial T débouchant dans une chambre de détente C3 réservée dans l'évidement 32a et communi-

0143730

quant avec l'orifice d'échappement M. La prévision de cette chambre de détente à l'échappement assure un fonctionnement très silencieux de l'appareil.

Dans l'alésage étagé de la chemise 33 est logé le tiroir de distribution 34 dont les déplacements sont pilotés au moyen du fluide gazeux comprimé. L'une des extrémités de ce tiroir de distribution est constituée par un piston différentiel 34a comportant deux faces de travail opposées f1, f2 d'inégales surfaces et monté avec une aptitude de coulissement étanche dans la portion de plus grand diamètre de l'alésage de la chemise 33. La grande face de travail f1 de ce piston différentiel délimite une chambre de pilotage C4 dont la paroi opposée est formée par la face interne du chapeau fixe 35.

D'autre part, la petite face de travail f2 du piston 34a délimite une chambre annulaire C5 également délimitée par un obturateur cylindrique 34b distant dudit piston et constitué par un bossage circulaire terminal du tiroir de distribution. Cette chambre communique en permanence avec l'orifice d'admission L, par le passage Q - Q' ; elle est donc continuellement sous pression. L'obturateur cylindrique 34b a un diamètre plus réduit que celui du piston différentiel 34a et il est monté avec une latitude de coulissement étanche dans la portion de plus petit diamètre de l'alésage de la chemise 33, de sorte que sa face f3 disposée en regard de la face f2 dudit piston différentiel, a une surface plus réduite que celle de cette dernière. Le piston différentiel 34a et l'obturateur cylindrique 34b sont équipés de joints périphériques d'étanchéité.

Un conduit calibré U à faible débit, exécuté dans le tiroir de distribution 34, établit une communication permanente entre les chambres C5 et C4.

0143730

Un canal V communiquant avec la chambre C4 est ménagé axialement dans le chapeau fixe 35 et ce canal débouche dans un raccord 36 sur lequel est fixé la seconde extrémité du tuyau souple 16 du circuit de pilotage pneumatique du tiroir de distribution du distributeur pneumatique.

Le fonctionnement du sécateur hydropneumatique qui vient d'être décrit est le suivant.
En position de repos (figures 1, 2, 5 et 6) suivant laquelle les lames du sécateur sont ouvertes, le fluide gazeux comprimé présent en permanence dans la chambre C5 maintient le tiroir de distribution 34 à proximité du fond de la chambre de pilotage C4, en raison du fait que la surface f2 du piston différentiel 34a est plus importante que la surface f3 de l'obturateur cylindrique 34b. Par l'intermédiaire du canal calibré U, une partie du fluide gazeux comprimé est prélevée dans la chambre C5 et transférée dans la chambre C4 d'où elle s'échappe librement par le circuit de pilotage V-36-16-15-B-O. Le circuit d'alimentation R'-R-N-J-I-H-K est fermé par l'obturateur cylindrique 34b, tandis que le circuit d'évacuation P-S-S' est ouvert et que la chambre C2 communique avec l'atmosphère par l'intermédiaire de ce circuit et du circuit d'échappement T-C3-M. Le piston hydropneumatique est maintenu en position de recul par l'action du ressort 30, tandis que le piston 8 du vérin hydraulique récepteur est maintenu en position d'avancement sous la poussée du ressort de rappel 10. Dans cette situation, le réservoir annulaire F communique avec la chambre C1 du vérin moteur. De la sorte, les inévitables déperditions d'huile qui se produisent en cours de fonctionnement, dans le système hydraulique de l'appareil, sont automatiquement et constamment compensées par l'entrée de quantités correspondantes d'huile dans la chambre

C1, lors des reculs du piston 8 dudit vérin moteur. Au fur et à mesure que la quantité d'huile diminue dans le réservoir F, la membrane 25 se déforme et se creuse diamétralement (tracé en traits interrompus de la figure 5), ce qui lui permet de s'adapter automatiquement à la variation de volume de la réserve d'huile. Grâce à cette membrane, le dispositif de compensation des fuites d'huile remplit toujours sa fonction, quelle que soit la position d'utilisation des outils.

Lorsqu'on ferme l'orifice d'échappement O du circuit de pilotage, en appuyant sur la gâchette 13-14, la pression s'élève dans la chambre de pilotage C4 et, compte tenu du fait que la surface de la face f1 du piston différentiel 34a est plus importante que la surface f2 de sa face opposée, le tiroir de distribution est déplacé dans une direction l'éloignant du fond de ladite chambre. Le déplacement correspondant de l'obturateur cylindrique 34b a pour conséquences :
- d'ouvrir le circuit d'alimentation R'-R-N-J-I-H-K ;
- de fermer le circuit d'évacuation P-S-S'.
La chambre C2 est mise en pression, ce qui a pour effet de repousser le gros piston pneumatique 19 et, par conséquent, l'ensemble du piston hydropneumatique 19-21-20 vers l'avant (figure 3). L'avancement du petit piston 20 du vérin hydraulique moteur du multiplicateur air-huile permet d'envoyer, par le conduit 27-12-11-A, l'huile sous pression dans la chambre C délimitée par la face active du piston 8 du vérin récepteur de l'outil proprement dit. Le piston 8 est repoussé vers l'arrière (figures 4 et 7), en comprimant le ressort de rappel 10 et en entraînant le pivotement de la lame mobile dans la position de fermeture.
On observe qu'avant d'arriver en fin de course d'avancement, le gros piston 19 obture l'orifice de communication I, par l'intermédiaire de la paroi cylindrique délimitant son alésage axial, ce qui a pour effet

d'interrompre l'entrée du fluide gazeux comprimé dans la chambre C2.

Lorsqu'on ouvre l'orifice d'échappement O du circuit de pilotage, en relâchant la gâchette 13-14, la chambre de pilotage C4 est remise en communication avec l'atmosphère, de sorte que le tiroir de distribution 34 se trouve repoussé en direction du fond de ladite chambre, en raison de l'inégalité des surfaces des faces f2 et f3 du piston différentiel 34a et de l'obturateur cylindrique 34b, respectivement, délimitant la chambre C5 constamment sous pression.

Ce déplacement du tiroir de distribution a pour conséquences :

- de fermer le circuit d'alimentation R'-R-N-J-I-H-K du vérin pneumatique 18-19 ;

- d'ouvrir le circuit d'échappement P-S-S' permettant de mettre la chambre C2 à l'atmosphère.

Compte tenu de l'absence de pression dans ladite chambre, le piston 19 du vérin pneumatique et, par conséquent, l'ensemble du piston hydropneumatique 20-21-19 est repoussé vers l'arrière par l'action conjuguée :

- du ressort de rappel 10 du vérin hydraulique récepteur 1-8 devenant vérin moteur ;

- du fluide de transmission (huile) exerçant une pression sur la face active du piston 20 du vérin hydraulique moteur 20-22 devenant vérin récepteur ;

- du ressort 30.

L'avancement du piston 8 entraîne l'ouverture de la lame mobile 4 du sécateur.

On a illustré, aux figures 8 et 9 une variante de réalisation du distributeur pneumatique du multiplicateur air-huile et du dispositif de commande du système de pilotage du tiroir de distribution dudit distributeur.

Le fonctionnement de ce mode d'exécution est inverse de celui qui est plus spécialement illustré à la figure 6, c'est-à-dire que c'est l'ouverture de l'orifice de sortie du circuit de pilotage qui provoque le déplacement du tiroir de distribution permettant l'entrée du fluide gazeux comprimé dans la chambre de pression C2 et le déplacement actif du piston 19 du vérin pneumatique 18-19.

Le distributeur pneumatique est installé fixement dans l'alésage 32a du boîtier 32.

Dans cet alésage, débouchent :

- l'orifice d'alimentation L1 ;

- au moins un orifice d'échappement M1 ;

- un orifice de communication N1 en relation constante et directe avec la chambre de pression C2 ou susceptible d'être mis en communication avec ladite chambre par l'intermédiaire du tube d'alimentation 31 et du circuit d'alimentation J-I-H-K précédemment décrits ;

- un orifice de sortie P1 communiquant avec la chambre C2.

La chemise cylindrique 33 du distributeur est pourvue de quatre gorges périphériques espacées, soit :

- une gorge Q1 communiquant avec l'orifice d'alimentation L1 ;

- une gorge R1 se trouvant en relation avec l'orifice de communication N1 ;

- une gorge S1 communiquant avec l'orifice de sortie P1;

- et une gorge W1 se trouvant en relation avec l'orifice d'échappement M1.

Ces gorges annulaires communiquent avec l'alésage 33b de la chemise 33 dans lequel est installé le tiroir de distribution 34, par l'intermédiaire de trous radiaux Q1', R1', S1', W1', respectivement, ladite chemise étant équipée de joints périphériques assurant l'étanchéité de part et d'autre desdites gorges.

Le tiroir de distribution 34 monté avec une aptitude de coulissement étanche dans l'alésage étagé de la chemise 33, est constitué par un système de pistons différentiels comprenant trois pistons alignés 34c, 34d, 34e, équipés de joints périphériques d'étanchéité.

Le piston 34c constituant l'une des extrémités du tiroir de distribution 34 est logé avec une latitude de coulissement dans la portion de plus grand diamètre de l'alésage 33b et il délimite, par sa grande face de travail externe f4, la chambre de pilotage C4 dont la paroi opposée est formée par la face interne du chapeau fixe 35.

La face opposée f5 du piston 34c délimite avec la face f6 disposée en regard et de surface identique du piston intermédiaire 34d, une chambre d'échappement C6 qui communique en permanence avec le passage d'échappement W1'-W1-M1 et qui, suivant la position dudit piston intermédiaire, peut être mise en relation avec la chambre C2, par l'intermédiaire du passage S1'-S1-P1 ou isolée de cette dernière.

Le piston intermédiaire 34d a un diamètre identique à celui du piston 34c et il est également monté avec une aptitude de coulissement étanche dans la portion de plus grand diamètre de l'alésage 33b. Il comporte une face de travail f7 inversement orientée par rapport à la face de travail f4 du piston 34c et ayant une surface plus petite que celle de cette dernière. D'autre part, la face de travail f7 du piston obturateur 34d délimite une chambre annulaire C7 également délimitée par la face de travail f8, disposée en regard, du piston 34e constituant la seconde extrémité du tiroir de distribution. Cette chambre communique en permanence avec l'orifice d'admission, par le passage Q1-Q1' ; elle est donc continuellement en pression.

Le piston 34e a un diamètre plus réduit que celui du piston intermédiaire 34d et il est monté avec une latitude de coulissement étanche dans la portion de plus petit diamètre de l'alésage 33b de la chemise 33, de sorte que sa face de travail f8 disposée en regard de la face f7 dudit piston intermédiaire, a une surface plus petite que celle de cette dernière.

Un canal longitudinal borgne X est ménagé à l'intérieur du tiroir de distribution. Ce canal axial communique en permanence :

- d'une part, avec la chambre d'admission C7, par l'intermédiaire de trous radiaux Y que présente la portion de tige reliant les pistons 34d et 34e ;

- d'autre part, avec la chambre C4, par l'intermédiaire d'un conduit axial calibré U à faible débit traversant le piston 34c.

Afin de ne pas contrarier les mouvements du tiroir de distribution, la chambre délimitée par la face inactive externe du piston 34e communique en permanence avec l'atmosphère, grâce à un évent 18c ménagé dans le corps 18.

Selon cette variante d'exécution, l'orifice d'échappement 0 du circuit pneumatique de pilotage du distributeur est équipé d'un obturateur comportant un organe mobile susceptible d'être actionné au moyen du levier 13, ou autrement.

Cet obturateur est, par exemple, constitué par un clapet conique 37 et par un siège de clapet 38. Le clapet 37 est rigidement solidaire d'un poussoir 39 dont une portion émerge de l'orifice d'échappement 0 et peut être repoussée par l'intermédiaire du levier de commande ou gachette 13 de l'outil ou, éventuellement, de toute autre façon.

Un ressort de compression 40 calé, par ses extrémités opposées, contre le fond du logement de l'obturateur et contre la face arrière du clapet 37, exerce en perma-

nence une pression sur ledit clapet assurant le rappel de celui-ci et tendant à l'appliquer sur son siège. Le fonctionnement de ce mode d'exécution du distributeur pneumatique est le suivant.

En position de repos (figure 8) le fluide gazeux comprimé remplit la chambre de pilotage C4 qui communique en permanence avec la chambre d'admission C7, par l'intermédiaire des orifices radiaux Y, du canal longitudinal X et du canal calibré U. Le fluide gazeux comprimé ne peut s'échapper de la chambre de pilotage C4, compte tenu du fait que le circuit de pilotage 0-15-16-36-V est fermé, le clapet 37 étant appliqué sur son siège 38. La surface de la face de travail f4 du piston 34c étant plus grande que la surface de la face de travail f7 du piston 34d, le tiroir de distribution est maintenu éloigné du fond de la chambre de pilotage, en position de recul. Dans cette situation, le passage d'alimentation R1'-R1-N1 du vérin pneumatique 18-19 est fermé par le piston intermédiaire obturateur 34d, tandis que la chambre C2 communique avec l'atmosphère par l'intermédiaire du circuit P1-S1-S1'-C6-W1'-W1-M1. Le piston hydropneumatique 19-21-20 est maintenu en position de recul par l'action du ressort 30, tandis que le piston 8 du vérin hydraulique récepteur est maintenu en position d'avancement sous la poussée du ressort de rappel 10.

Lorsqu'on ouvre l'orifice d'échappement 0 du circuit de pilotage (figure 9), en appuyant sur la gâchette 13 permettant d'écarter le clapet 37 de son siège 38, la pression tombe dans la chambre de pilotage C4 et, compte tenu du fait que la surface de la face de travail f7 du piston intermédiaire 34d est plus grande que la surface f8 placée en vis-à-vis du piston 34e, le tiroir de distribution 34 est déplacé dans une direction le rapprochant du fond de ladite chambre. Ce déplacement du tiroir de distribution a pour conséquences :

- d'ouvrir le passage d'alimentation R1'-R1-N1 qui établit une communication entre les chambres C7 et C2 ;
- de fermer le passage d'évacuation Q P1-S1-S1' qui se trouve obturé par le piston intermédiaire 34d.

La chambre C2 est mise sous pression et le piston hydropneumatique 19-21-20 est repoussé vers l'avant, ce qui entraîne le pivotement de la lame mobile 4 de l'outil en position de fermeture, comme indiqué précédemment.

Lorsqu'on ferme à nouveau l'orifice d'échappement O du circuit de pilotage, en relâchant la gâchette 13, la pression s'élève dans la chambre de pilotage C4 et, en raison du fait que la surface de travail $f4$ du piston 34c est plus grande que la surface de travail $f7$ du piston obturateur 34d, le tiroir de distribution est déplacé dans une direction l'éloignant du fond de ladite chambre.

Ce déplacement du tiroir de distribution a pour conséquences :
- de fermer le passage d'alimentation R1'-R1-N1 qui est obturé par le piston intermédiaire 34d ;
- d'ouvrir le passage d'évacuation P1-S1-S1' permettant de mettre la chambre C2 à l'atmosphère, par l'inter-médiaire du passage d'échappement C6-W1'-W1-M1.

En raison de l'absence de pression dans ladite chambre, le piston 19 du vérin pneumatique et, par conséquent, l'ensemble du piston hydropneumatique 19-21-20 est repoussé vers l'arrière par l'action des moyens déjà décrits, ce qui, dans l'exemple d'application illustré, entraîne l'ouverture de la lame mobile du sécateur.

- 1 -

0143730

Revendications de brevet

1. - Outils hydropneumatiques, notamment outils hydropneumatiques portatifs tels que, par exemple, sécateurs hydropneumatiques destinés au travaux de taille ou de récolte en agriculture, arboriculture, viticulture ou horticulture, comprenant principalement :
- un outil proprement dit dont au moins un organe actif mobile (4) est assujetti à un piston (8) monté avec une aptitude de coulissement axial dans l'alésage d'un cylindre (1) et constituant, avec celui-ci, un vérin hydraulique récepteur ; et un multiplicateur de pression air-huile comprenant un piston hydropneumatique (19-20-21) formé d'un gros piston (19) et d'un petit piston (20) et dont la course active s'effectue sous la poussée d'un fluide gazeux comprimé s'appliquant sur la grande face de travail dudit gros piston ; la face de travail dudit petit piston qui constitue le piston d'un vérin hydraulique moteur (20-22), permettant d'appliquer une pression sur le fluide hydraulique destiné à l'actionnement du piston (8) du vérin hydraulique récepteur (8-1) de l'outil proprement dit ;
caractérisés en ce qu'ils comportent des moyens de compensation de fuites d'huile comprenant un réservoir (F), par exemple aménagé à l'intérieur du corps (18) du multiplicateur air-huile, et un agencement (E, 22a, 22b, 24a, 24b) permettant d'établir une communication entre ce réservoir et la chambre du vérin hydraulique moteur (20-22) lorsque le piston (20) de ce dernier est en position de recul ou repos.

2. - Outils hydropneumatiques selon la revendication 1, caractérisés en ce que ledit réservoir (F) a une forme annulaire et est disposé autour du cylindre (22) du vérin hydraulique moteur (20-22).

3. - Outils hydropneumatiques suivant l'une des revendications 1 ou 2, caractérisés en ce que l'ouverture permettant d'établir une communication entre le réservoir (F) et la chambre (C1) délimitée par la face de travail du petit piston (20) du vérin hydraulique moteur (20-22), est constituée par une extrémité ou base ouverte (22b) du cylindre (22) dudit vérin, et en ce que la longueur de la tige (21) qui relie le gros piston (19) audit petit piston (20) est telle que ce dernier se trouve dégagé de ladite chambre lorsqu'il est en position de recul ou repos.

4. - Outils hydropneumatiques selon l'une des revendications 2 ou 3, caractérisés en ce que la paroi latérale du réservoir annulaire (F) est constituée par une membrane tubulaire déformable (25).

5. - Outils hydropneumatiques suivant la revendication 4, caractérisés en ce que la portion du corps (18) qui entoure la membrane déformable (25) est pourvue d'au moins un perçage (18a).

6. - Outils hydropneumatiques selon la revendication 4, caractérisés en ce que les extrémités de la membrane tubulaire déformable (25) comportent un bourrelet (25a, 25b) permettant sa fixation et constituant un joint assurant l'étanchéité entre le corps ou cylindre extérieur (18) du multiplicateur air-huile et les parois de fond (23, 24a) délimitant le réservoir annulaire (F) et logées dans ledit corps.

7. - Outils hydrauliques suivant la revendication 1 dans lesquels le rappel du piston hydropneumatique (19-20-21) est assuré par la pression exercée, par le fluide hydraulique, sur la face active du petit piston (20) dudit piston hydropneumatique, sous l'action du moyen de rappel (10) du piston (8) du vérin hydraulique récepteur (8-1) de l'outil proprement dit, caractérisés en ce qu'ils comportent un moyen complémentaire de rappel agissant sur le gros piston (19), ce moyen complémentaire de rappel étant, par exemple, constitué par un ressort de compression (30) calé contre la face inactive dudit gros piston.

8. - Outils hydrauliques selon la revendication 1 dont le multiplicateur air-huile comprend un distributeur pneumatique commandant le passage du fluide gazeux sous pression en direction de la chambre de pression (C2) délimitée par la face active du gros piston (19) du piston hydropneumatique (19-20-21) et comportant un tiroir de distribution (34) dont les déplacements sont commandés à l'aide d'un dispositif de pilotage actionné au moyen d'un organe de commande (13) porté par l'outil proprement dit, caractérisés en ce que ledit dispositif de pilotage comprend un unique conduit (V-36-16-15-B) dont l'orifice de sortie (O) est susceptible d'être obturé ou ouvert au moyen dudit organe de commande et dont l'orifice d'entrée s'ouvre dans une chambre de pilotage (C4) délimitée par la grande face active (f1, f4) d'un système de pistons différentiels (34a, 34c-34d-34e) constitué par le tiroir de distribution (34), ladite chambre de pilotage communiquant, en permanence, avec l'entrée (L, L1) du fluide gazeux comprimé, au moyen d'un canal calibré (U) à très faible débit.

9. - Outils hydrauliques selon la revendication 8, caractérisés en ce que ledit canal calibré (U) établit une communication permanente entre ladite chambre de pilotage (C4) et une seconde chambre (C5) délimitée par la petite face active (f2) du piston différentiel (34a) et par la face (f3) disposée en vis-à-vis et de surface plus réduite d'un bossage circulaire (34b) du tiroir de distribution (34), ladite seconde chambre (C5) communiquant constamment avec l'entrée (L) du fluide gazeux comprimé.

10. - Outils hydrauliques selon la revendication 8 caractérisés en ce que le tiroir de distribution (34) du distributeur pneumatique comprend trois pistons, soit un premier piston extrême (34c) dont la grande face de travail (f4) délimite la chambre de pilotage (C4), un deuxième piston ou piston intermédiaire (34d) constituant l'organe obturateur dudit tiroir de distribuution et comportant une face de travail (f7) inversement orientée par rapport à la face de travail (f4) dudit premier piston et dont la surface est plus petite que celle de cette dernière, et un troisième piston (34e) comportant une face de travail (f8) disposée en regard de la face de travail (f7) dudit piston intermédiaire et dont la surface est inférieure à celle de cette dernière ; le tiroir de distribution (34) étant monté avec une aptitude de coulissement étanche dans une chemise cylindrique (33) dotée de quatre gorges périphériques (Q1, R1, S1, W1) communiquant avec son alésage étagé (33b) par l'intermédiaire de trous (Q1', R1', S1', W1') se trouvant, respectivement, en relation avec l'orifice d'alimentation (L1), le passage d'alimentation (N1) aboutissant à la chambre de pression (C2) délimitée par la face active du gros piston (19) du piston hydropneumatique (19-21-20), le passage d'évacuation (P1) communiquant avec ladite chambre de pression et l'orifice d'échappement (M1) ; le piston obturateur intermédiaire (34d) délimitant, par ses faces opposées (f7, f6), d'une part, une chambre annulaire d'admission (C7) se trouvant en relation constante avec l'entrée (L1) du fluide gazeux comprimé, par l'intermédiaire d'une première gorge périphérique (Q1) et qui, selon la position dudit piston obturateur, peut être mise en relation avec la chambre de pression (C2), par l'intermédiaire d'une seconde gorge périphérique (R1), ou isolée de ladite chambre de pression, et, d'autre part, une chambre annulaire d'échappement (C6), se trouvant en relation constante avec l'orifice d'échappement (M1), par l'intermédiaire d'une troisième gorge périphérique (W1), et qui, suivant la position du piston obturateur, peut être mise en communication avec la chambre de pression (C2), par l'intermédiaire de la quatrième gorge périphérique (S1), ou isolée de ladite chambre de pression ; la chambre d'admission annulaire (C7) communiquant en permanence avec la chambre de pilotage (C4) par l'intermédiaire du canal calibré (U) et de trous radiaux (Y) s'ouvrant entre le piston obturateur (34d) et le piston terminal (34e) et débouchant dans un canal longitudinal borgne (X) ménagé dans le tiroir de distribution et communiquant avec ledit canal calibré à très faible débit.

11. - Outils hydropneumatiques suivant l'une quelconque des revendications 1, 7 ou 8, caractérisés en ce que leur multiplicateur air-huile de pression comprend des moyens permettant d'interrompre l'admission de fluide gazeux comprimé dans la chambre de pression (C2) délimitée par la grande face de travail du piston hydropneumatique (19-20-21), avant que le piston pneumatique (19) de ce dernier n'arrive en fin de course active.

12. - Outils hydropneumatiques selon la revendication 11, caractérisés en ce que lesdits moyens comprennent un tube d'alimentation (31) pénétrant dans un évidement longitudinal (21a) que présente la portion postérieure de la tige (21) reliant le petit piston (20) et le gros piston (19) du piston hydropneumatique (19-20-21), ledit gros piston étant monté avec une aptitude de coulissement sur ledit tube d'alimentation dont l'extrémité opposée à son orifice d'entrée est fermée, la communication entre le distributeur pneumatique et la chambre de pression (C2) délimitée par la grande face de travail du gros piston, étant établie au moyen d'un circuit d'alimentation comprenant :
- un canal (J) constituée par l'alésage du tube d'alimentation, - au moins un orifice (I) ménagé dans la paroi latérale de ce dernier, à proximité de son extrémité fermée (31a), - un passage (H), de préférence annulaire, réservé entre ledit tube d'alimentation et la paroi latérale délimitant ledit évidement (21a),
- et au moins un orifice (K) que présente ledit gros piston, de préférence à proximité de son alésage axial.

Fig.1

25 F C₁ 18a 22 24a 20 18b E 24 24b 21 30 18 31 19 16 C₂ 32 36 35

34a
34
34b
33
M
C₃

12 27 28 26 23

Fig.2

3
4
2 4a 5 6 7 17 D 13 10 O 14 B 15 16
9 8 1a 1 A 11 1b 12

1/7   0143730

0143730

Fig.3

Fig.4

29    23    23a    F    18a    C₁    22a    24a    E    22b    18b    24b    18    30

28 27 26 G

25a    25    22    Fig.5    25b    24    20    21    24c

3/7

0143730

Fig.6

0143730

Fig.7

Fig.8

Fig.9

Office européen des brevets

**RAPPORT DE RECHERCHE EUROPEENNE**

0143730
Numéro de la demande

EP 84 43 0037

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A- 884 526 (A.M.P. INC.)<br><br>* Page 2, lignes 16-80; figure 1 *<br><br>--- | 1,2,6, 7,10 | B 26 B 15/00<br>A 01 G 3/03<br>F 15 B 7/10 |
| X | CH-A- 429 462 (TOROSSIAN)<br>* Colonne 1, ligne 40 - colonne 3, ligne 10; figures 1,2,3 *<br><br>--- | 1,3 | |
| Y | GB-A- 879 825 (A.M.P. INC.)<br><br>* Page 1, ligne 83 - page 2, ligne 76; figures 1,2 *<br><br>--- | 1,2,6, 7,10 | |
| Y | FR-A-2 321 839 (CALLIGARO)<br><br>* Pages 1-4; figure *<br><br>--- | 1,2,6, 7,10 | DOMAINES TECHNIQUES RECHERCHES (Int. Cl.4) |
| A | FR-A-2 242 582 (BOSCH)<br>* Page 4, ligne 10 - page 5, ligne 14; figure 1 *<br><br>--- | 8,9 | B 26 B<br>A 01 G<br>B 23 D |
| A | FR-A-2 159 755 (A.M.R.I.)<br>* Page 3, ligne 21 - page 5, ligne 4; figures 1,2 *<br><br>--- | 4 | F 15 B |
| A | US-A-3 636 707 (SAARI et al.)<br>* Abrégé *<br><br>----- | 11 | |

Le présent rapport de recherche a été établi pour toutes les revendications

| Lieu de la recherche<br>LA HAYE | Date d'achèvement de la recherche<br>15-02-1985 | Examinateur<br>WOHLRAPP R.G. |
|---|---|---|

OEB Form 1503. 03.82

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant